(19) **Europäisches Patentamt**
**European Patent Office**
**Office européen des brevets**

(11) **EP 2 618 298 A1**

(12) **EUROPEAN PATENT APPLICATION**
published in accordance with Art. 153(4) EPC

(43) Date of publication:
**24.07.2013 Bulletin 2013/30**

(51) Int Cl.:
*G06Q 50/00* *(2012.01)*

(21) Application number: **11824955.6**

(86) International application number:
**PCT/JP2011/069157**

(22) Date of filing: **25.08.2011**

(87) International publication number:
**WO 2012/035947 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2010 JP 2010204609**

(71) Applicant: **NEC Corporation Tokyo 108-8001 (JP)**

(72) Inventor: **KAMI, Nobuharu Tokyo 108-8001 (JP)**

(74) Representative: **MacDougall, Alan John Shaw et al Mathys & Squire LLP 120 Holborn London EC1N 2SQ (GB)**

(54) **COORDINATED INFORMATION COLLECTION SYSTEM, COORDINATED INFORMATION COLLECTION METHOD AND PROGRAM**

(57) A management server 101 has: a terminal state management unit 122 that manages state information transmitted from information terminals 102 and including information on an information terminal 102 and a user associated with each information terminal 102; and a network configuration management unit 123 that selects adjacent information terminals 102 of each information terminal 102 based on the state information of each information terminal 102 managed by the terminal state management unit 122, and calculates a connection link, which is a network for interconnecting adjacent information terminals 102, wherein the information terminal 102 has: an internal state management unit 113 that manages the state information of the information terminal 102; an adjacent management unit 115 that manages information on adjacent information terminals 102 selected by the network configuration management unit 123; and a messaging unit 116 that stores a message acquired from an adjacent information terminal via the connection link and a message inputted by the user in a message box opened to the other information terminals, and manages these messages, and the network configuration management unit 123 calculates a degree of dissimilarity among information terminals based on the state information of each information terminal 102, and calculates a first type connection link that creates a connection link sequentially from an information terminal 102 having a lower degree of dissimilarity, and a second type connection link which is created stochastically based on the degree of dissimilarity.

Fig. 1

EP 2 618 298 A1

**Description**

BACKGROUND

The present invention relates to a coordinated information collection system, a coordinated information collection method, and a program.

In a dynamic large scale system of which state constantly changes, it is difficult to collect and process events which occur at an unpredictable timing and place with a good real-time method. An available method commonly known is a method of collecting information constantly and intensively in the background. For example, by searching a web page, information is always being collected and updated, and an enormous volume of collected information is organized by visiting web pages distributed throughout the Internet using a program called a "crawler". However as the scale of processing increases, the method of managing all events intensively cannot keep up with demand, and real-time processing corresponding to the dynamic changes becomes difficult. An effective method for processing events in real-time in a large scale system is a distributed processing method. One such method is to utilize a social network, which is a network of individuals, that is, constituting the network by composing elements distributed in the system.

Non-patent Document 1 describes a contest where red balloons are set at ten places in the United States, and a team that identifies all the places first wins the contest. The MIT Media Lab Team won this contest, using a recursive recruiting method modeled by following a social network of individuals distributed nation-wide, and rewarding a participant who reported a correct position of a balloon. In other words, each distributed individual, which is a composing element of a network, searched target information (place of a balloon) recursively using only local information (adjacent nodes of this individual), such as k number of friends of this individual, and k number of friends of each of these friends ... , and identifies all the places of the balloons in a short time of 8 hours 52 minutes. This is an effective method to collect distributed information by "human sensors" distributed nation-wide as much as possible when there is no prior knowledge on the positions of the balloons, even if network resources are consumed.

In a case when a relationship between a characteristic of a search target and a characteristic of a configuration node of a network can be specified, it is known that an efficient method can be implemented by using a similarity of the characteristics, which is better than broadcasting a query. For searching data, to include files as well, many efficient methods for searching target information by creating a network based on similarity and tracking the network have been proposed. For example, a characteristic of data is represented by a point in an appropriate characteristic space, and a network is constructed based on a distance of an arbitrary two datum. Search is performed by repeating processing to advance to a node which is likely closest to a search target data among adjacent nodes connected to each node, and if a searchable network structure is constructed, efficient searching becomes possible merely by going through limited nodes.

Non-patent Document 1: "DARPA Network Challenge PROJECT REPORT", https://networkchallenge.darpa.mil/ProjectReport.pdf, February 16, 2010

The conventional methods, including the method described in Non-patent Document 1, are all distributed search methods utilizing only local adjacent information of distributed nodes. According to these methods, if a structure (connection structure of the network) of the distributed nodes, based on positional relationships in a space where the characteristics thereof are mapped, is created in advance, then a node closely related to the search target event can be searched by efficiently tracking the network using a relationship of the characteristic of the search target event and the characteristic of the network node as a clue. If this clue is not available, a node closely related to the search event is searched by recursively expanding the search to the adjacent nodes sequentially from the start node using the network, and in order to decrease search time, the number of search nodes is increased by broadcasting, which consumes network resources.

A problem of this method is the case when a distributed search using a network is performed for an event of which location in the system is unpredictable, and if a relationship between the characteristic of the event and the characteristic of the network node is not clearly specified, consumption of network resources for search increases. This is because a direction in the network, where the node having detailed information on the search target event exists, is unknown, and with a query being broadcasted reclusively not for specific adjacent nodes but for all the adjacent nodes, network resource consumption increases explosively every time the number of hops increases.

Another problem is that in the case of a search that conserves network resource consumption, search efficiency is greatly different depending on the network structure, the initial position of the searcher in the network and the position of the network node having the detailed information on the search event. This is because in a case when the number of adjacent nodes to which a query can be broadcasted at once is decreased in a search of an arbitrary search event, the search can be quickly completed if the initial position of the searcher happens to be near the node having the detailed information on the search event, and the searcher can reach this node with the small number of hops, but if the user is located very far from the node requiring many hops, then the probability of reaching the node becomes very low, and search takes a long time.

SUMMARY

With the foregoing in view, it is an exemplary object of the present invention to provide a coordinated information collection system, and that can search and collect information efficiently in real-time in a system in which states change dynamically, while keeping consumption of network resources low.

A coordinated information collection system according to the present invention is a coordinated information collection system comprising a management server and a plurality of information terminals which are connected via a communication network, wherein the management server has: a terminal state management unit that manages state information transmitted from the information terminals and including information on an information terminal and a user associated with each of the information terminals; and a network configuration management unit that selects adjacent information terminals of the information terminals, based on the state information of each of the information terminals managed by the terminal state management unit, and calculates a connection link, which is a network for interconnecting the adjacent information terminals, and the information terminals respectively have: an internal state management unit that manages the state information of the information terminal; an adjacent management unit that manages information on adjacent information terminals selected by the network configuration management unit; and a messaging unit that stores a message acquired from an adjacent information terminal via the connection link and a message inputted by the user in a message box opened to other information terminals, and manages these messages, and wherein the network configuration management unit calculates a degree of dissimilarity among information terminals based on the state information of each information terminal, and calculates a first type connection link that creates a connection link sequentially from an information terminal having a lowest degree of dissimilarity, and a second type connection link which is created stochastically based on the degree of dissimilarity.

According to an exemplary aspect of the present invention, information can be searched and collected efficiently in real-time in a system in which states dynamically change, while keeping consumption of network resources low.

DESCRIPTION OF THE DRAWINGS

Fig. 1 is a block diagram depicting a configuration of a coordinated information collection system according to an embodiment of the present invention.
Fig. 2 is a diagram depicting an example of a network structure according to an embodiment of the present invention.
Fig. 3 is an example of a terminal state management table according to an embodiment of the present invention.
Fig. 4 is a diagram depicting a function of a network configuration management unit according to an embodiment of the present invention.
Fig. 5 is a diagram depicting a function of a messaging unit according to an embodiment of the present invention.
Fig. 6 is a diagram depicting a propagating state of messages according to an embodiment of the present invention.
Fig. 7 is a flow chart depicting an operation of an information terminal according to an embodiment of the present invention.
Fig. 8 is a diagram depicting Example 1 of the present invention.
Fig. 9 is a diagram depicting tracking steps of a tracker according to Example 1 of the present invention.
Fig. 10 is a flow chart depicting an operation of the tracker according to Example 1 of the present invention.
Fig. 11 is a diagram depicting Example 2 of the present invention.

EXEMPLARY EMBODIMENT

An exemplary embodiment of the present invention will now be described with reference to the drawings.

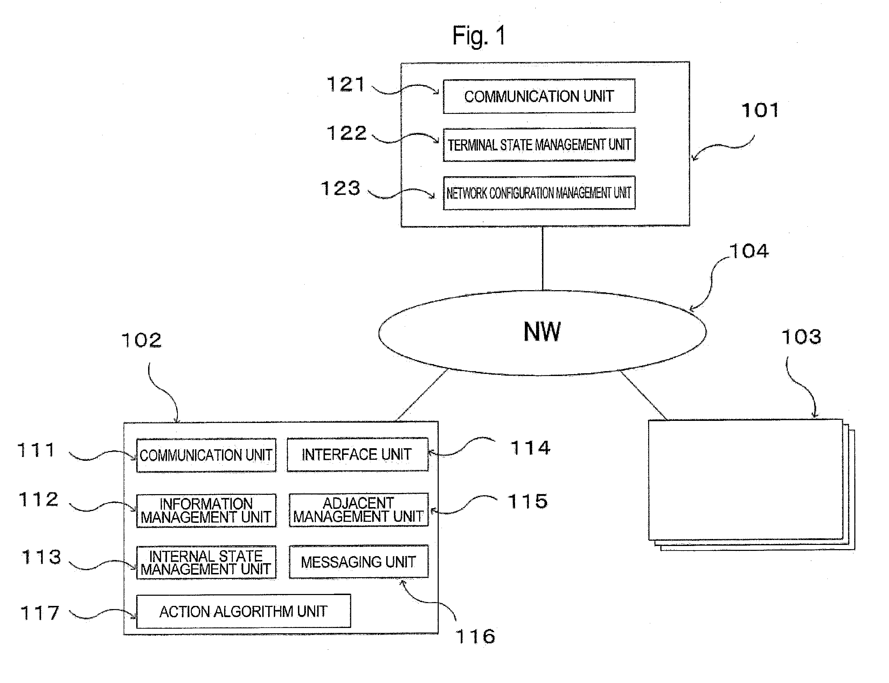

Fig. 1 is a block diagram depicting a configuration of a coordinated information collection system according to an embodiment of the present invention. As Fig. 1 shows, the coordinated information collection system has a management server 101 and an information terminal 102. The management server 101 and the information terminal 102 are connected via a network 104. A plurality of information terminals 102 on the network 104 constitute an information terminal group 103.

The management server 101 includes a CPU, a ROM, a RAM, a communication interface and a hard disk device, and operates by the CPU executing various control programs which are read from such a storage devices as ROM and hard disk to RAM.

The management server 101 has a communication unit 121, a terminal state management unit 122 and a network configuration management unit 123, and each of these components is an operation module which the CPU executes according to a program.

The communication unit 121 has a function to execute a network protocol for performing communication via the network 104. Typically the protocol is TCP.

The terminal state management unit 122 has a function to manage each internal state information (state information) transmitted from the information terminal 102. The internal state information is a current position acquired by GPS (Global Positioning System), for example. Information expressed by vectors may be used instead. The terminal state management unit 122 is a component to manage information unique to each information terminal 102 and a user who uses the information terminal, and is not limited to the above mentioned mode.

The network configuration management unit 123 has a function to calculate a network structure to be constituted by the information terminals 102, and to manage the network based on the internal state of each information terminal 102 managed by the terminal state management unit 122. The calculated network information (adjacent information of each information terminal 102) is transmitted to each information terminal 102 respectively.

The information terminal 102 includes a CPU, a ROM, a RAM, a communication interface and a hard disk device, and operates by the CPU executing various control programs which are read from such a storage device as ROM and hard disk to RAM. The information terminal 102 is a personal computer, a portable telephone, a portable information terminal or the like.

The information terminal 102 has a communication unit 111, an information management unit 112, an internal state management unit 113, an interface unit 114, an adjacent management unit 115, a messaging unit 116, and an action algorithm unit 117. Each of these components is an operation module which the CPU executes according to a program.

The communication unit 111 has a function to execute a network protocol for performing communication via the network 104. Typically the protocol is TCP.

The information management unit 112 manages information inputted by the user via the interface unit 114. The information management unit 112 also inserts a message inputted by the user into a buffer of the messaging unit 116. The information management unit 112 also processes and manages message information acquired from another information terminal 102 via the managing unit 116.

The internal state management unit 113 has a function to edit and manage information on the current state (internal state) of the information terminal 102 and the user. The internal state is, for example, a current position acquired by GPS. The internal state may also be information expressed by vectors, and in this case, the internal state management unit 113 manages a history of the vectors. Generally the internal state management unit 113 is a component to manage information unique to each information terminal 102 and a user who uses the information terminal, and is not limited to the above mentioned mode.

The interface unit 114 has an interface function for the user to input/output information to/from the information terminal 102, and includes a GUI (Graphical User Interface) or a CLI (Command Line Interface), for example.

The adjacent management unit 115 manages information on adjacent information terminals 102, to which each information terminal 102 is connected via the network 104. The information is typically a list of IP addresses and host names of other information terminals 102. The link for connection may or may not have a direction, but in this embodiment, it is assumed that a directed link is used. The direction is assumed to be a direction from another information terminal 102 having a registered IP address to the current terminal.

The messaging unit 116 has a function to acquire and buffer information owned by another information terminal 102 registered in the adjacent management unit 115 (hereafter called "message"), or to fetch a message when a message acquisition request is received from another information terminal 102.

The action algorithm unit 117 uses an algorithm unit to describe an action of an information terminal 102 and a user based on information extracted from message information processed by the information management unit 112. If only processing onboard the information terminal 102 is performed, the algorithm unit automatically performs predetermined processing, and if action is prompted to the user, the action algorithm unit 117 outputs the information to the user via the interface unit 114, and performs a new action responding to the input or action by the user.

The network 104 is the Internet, for example, and a network infrastructure protocol, such as TCP/IP, which allows highly reliable communication, can be used. Physically the network 104 can be radio or cable.

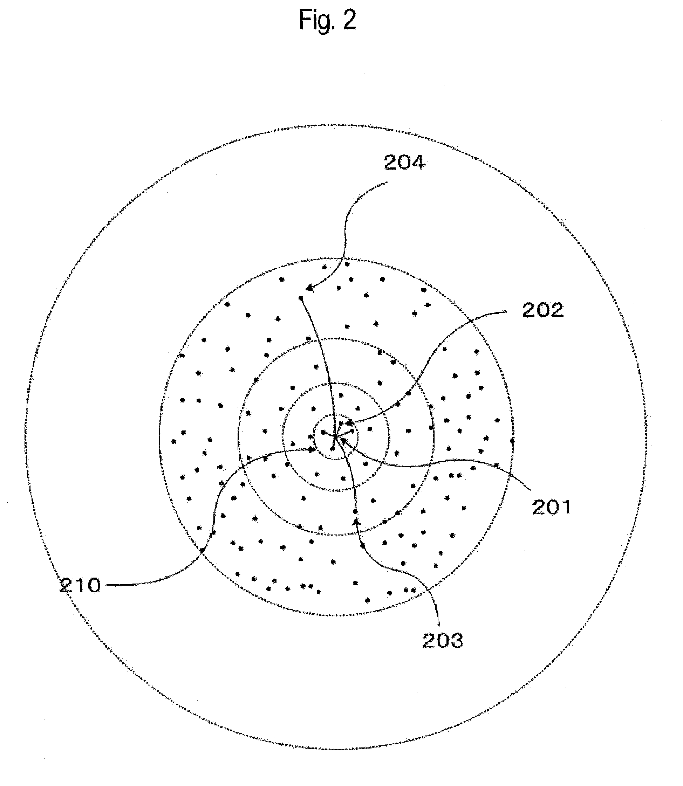

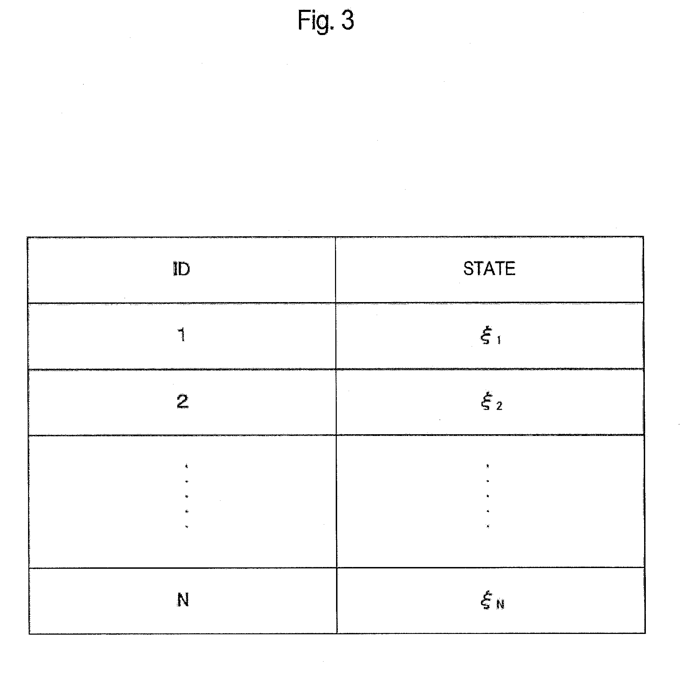

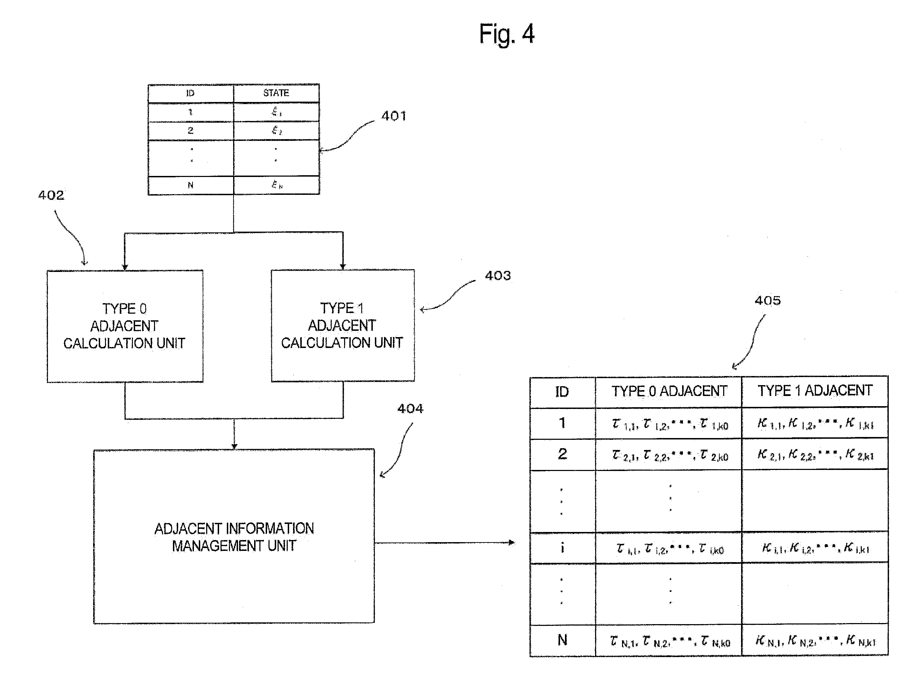

Now the network structure managed by the network configuration management unit 123 of the management server 101 will be described in detail with respect to Fig. 2 to Fig. 4. Fig. 2 is a diagram depicting an example of a network structure, Fig. 3 is an example of a terminal state management table, and Fig. 4 is a diagram depicting a function of the network configuration management unit 123.

Here the internal state of the information terminal 102 is described using only two-dimensional vectors (the height direction is ignored), that expresses a geodetic position, but expression of the internal state is not limited to this, and it is sufficient if a characteristic of a state of an information terminal 102 is expressed as one point in a space so that dissimilarity of the state among terminals can be measured using a distance defined in that space.

The internal state management unit 113 constantly updates the internal state of the information terminal 102 using GPS, and transmits this information to the management server 101. The terminal state management unit 122 of the management server 101 manages the current internal state of all the information terminals 102 by the terminal state management table shown in Fig. 3. In the terminal state management table, as shown in Fig. 3, an internal state $\xi i$ is

held for each ID = i of the information terminal 102.

The internal state information may be periodically notified from each information terminal 102 at a predetermined period. Notification may be sent non-periodically based on a predetermined rule, such as when the position of the information terminal 102 is moved a predetermined distance or more. Notification may be sent when a query is received from the management server 101.

The management server 101 may manage only the latest internal state of each information terminal 102, or may manage a past record if necessary. The network configuration management unit 123 calculates the adjacency of each information terminal at an appropriate timing, using the terminal state management table, so as to manage the network configuration.

As Fig. 4 shows, the network configuration management unit 123 considers two types of connection links: type 0 (first type connection link) and type 1 (second type connection link), and assuming that the k0 number of type 0 connection links and the k1 number of type 1 connection links are connected, a type 0 adjacent calculation unit 402 and a type 1 adjacent calculation unit 403 calculate the respective adjacency referring to the terminal state management table 401.

The type 0 adjacent calculation unit 402 selects the k0 number of nodes in sequence, from a node having a shortest distance (distance expressed by geodetic coordinates) to each information terminal 102. In the case of the example shown in Fig. 2, four adjacent nodes (k0 = 4) are selected for the node 201, and a node 202, for example, is one of these four. Here if a typical distance that includes the k0 number of nodes is selected as a reference distance r0, and an area of which radius is r0 is specified as an area 210, then all the type 0 adjacent nodes are included in the area 210. For example, if N number of information terminals 102 are evenly distributed in the circle of which radius is R, R $((k0 + 1)/N)^{0.5}$ can be used as a typical r0.

Now a method for the type 1 adjacent calculation unit 403 to select type 1 adjacent nodes will be described. Here it is assumed that in use of r0 an internal area of a circle of which radius is a distance I from the node u, that is I = $r0 \times 2^j$ (j = 0, ... , j * +1), and a shell $S_j$ (u) is Sj (u) = ¬($B_j$ (u)) ∩ B $_{j+1}$ (u). Here ¬(A) is the negation of A. In other words, $S_j$ (u) is an area of which distance from the node u is greater than $r0 \times 2^j$ and smaller than $r0 \times 2^{j+1}$. When a node v is a node in a set of nodes of which distance is longer than r0, that is ¬($B_0$ (u)), a probability that the node v will be selected as a type 1 node is given by the following expression (1).

[Math. 1]

Pr [node v is selected as a type 1 adjacent node of node u] =

$$\frac{d(v,u)^{-\alpha}}{\sum\limits_{v \in \neg B_0(u)} d(v,u)^{-\alpha}} \quad \cdots (1)$$

Here d (u, v) is a distance between u and v, and α is a control parameter determined by the number of dimensions D (D = 2 in this example). α is a parameter to determine a distance of a node that can be linked, and a closer node is selected as α becomes greater.

If α = κD (1 ≤ κ < 2) is used as a typical value, the type 1 adjacent links from the node u are created to the nodes belonging to $S_j$ (u) with approximately even probability for all the values of j, so adjacent nodes are selected with approximately even probability for all the distance scales from the node u. Therefore a link will be created with any node, and a message can be received from the node with an approximately same probability, regardless of the distance of the distance scale. According to this probability, k1 number of adjacent nodes are selected.

For example, in the case of D = 2, that is in the case when d (u, v) is expressed as a distance on a plane, if d (u, v) doubles, an area of the circle of which radius is d (u, v) quadruples, therefore if nodes are evenly distributed, the number of nodes existing in the circle also quadruples. Hence if links are formed based on the same probability, more links are created with distant nodes, but in the case of Expression (1), the probability with α = 1 is in proportion to the negative second power of d (u, v), so the link establishing probability when d (u, v) is large can be kept low. As a consequence, adjacent nodes are selected with approximately even probability for all the distance scales from the perspective of node u. This effect is greater as α becomes greater.

In the case of the example shown in Fig. 2, if the node 201 is the node u and k1 = 2, the node 203 is selected from the shell $S_2$ (u) and the node 204 is selected from the shell $S_3$ (u). The adjacent information management unit 404 creates the adjacent information management table 405, using the type 0 adjacent node list and the type 1 adjacent node list calculated by the type 0 adjacent calculation unit 402 and the type 1 adjacent calculation unit 403. In the adjacent information management table 405, the type 0 adjacent node list and the type 1 adjacent node list are stored for each ID (node in Fig. 2) of the information terminal 102.

If the adjacent management unit 115 of an information terminal 102 queries on the adjacent information, the adjacent information corresponding to the ID of this information terminal 102 can be acquired and transmitted with reference to the adjacent information management table 405. The adjacent management unit 115 can maintain the adjacent information in the latest state by constantly querying the management server 101 on the adjacent information, or receiving an adjacent information update instruction from the management server 101.

Normally k0 is a value that is sufficient for all the network nodes to reach any node via a link. The type 0 is a local link that connects nodes within a short distance, and type 1 is a shortcut link that directly connects with a distant adjacent node without going through the local link. By creating these two types of links, as mentioned above, all the nodes can reach any node by tracking the links, and all the nodes can be reached with the similar number of hops regardless of the distance scale of a node.

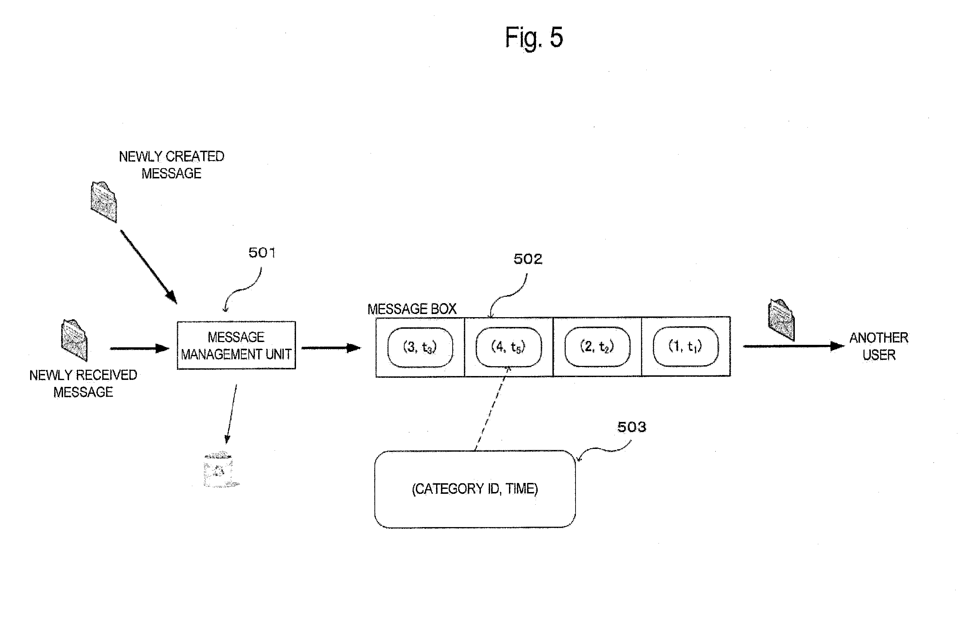

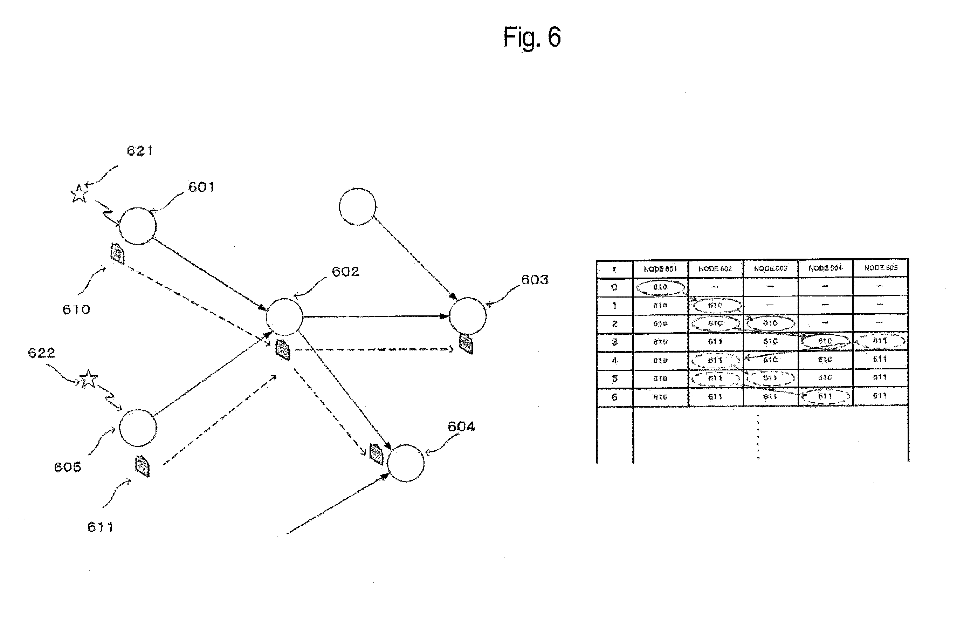

Now a function of the messaging unit 116 will be described with reference to Fig. 5 and Fig. 6. The messaging unit 116 constitutes an inter-user message transfer platform for propagating a new message created by a user who operates the information terminal 102 and a message created by other users via the network.

First a case when a user who operates the information terminal 102 creates a new message will be described. The user inputs information via the interface unit 114, and the information management unit 112 creates a message based on this input information. This message contains detailed creation information in addition to such meta-information as a message ID, ID information on the information terminal 102, and a message creation date and time.

The information management unit 112 transmits the message to the messaging unit 116. The messaging unit 116 transmits the newly created message to the message management unit 501, as shown in Fig. 5. The message management unit 501 manages the message box 502.

The message box 502 is an information container opened to other terminals 102, and other terminals 102 can freely acquire information. The message box 502 is constructed as a finite buffer, and secures a buffer area for each of the predetermined categories. In the case of the example in Fig. 5, only meta-information of the message is shown in the message 503, but a message category ID and a creation time may be contained in the meta-information. In this example, the buffer length of the message box 502 is four, and one message storage area is assigned to each message category. In other words, according to this example, messages for four categories can be stored. The message management unit 501 stores new information with priority for each category, and if the message size exceeds the buffer size, only newer information (information of which creation date and time is later) is saved if the messages have a same category ID.

If a message with a new category ID is input when the buffer is completely full, the inputted message is compared with the oldest information stored in the buffer, and if the inputted message is newer, the inputted message overwrites the oldest information. Then if a message newly created in the information terminal 102 is inputted, this message is always newer than the other message stored in the buffer, so if the buffer is completely full, the new message overwrites the oldest message, and the old information is discarded. A new message is posted in this way.

Now a method for forwarding a message will be described. First the message management unit 501 periodically acquires the adjacent information terminal list from the adjacent management unit 115, selects one or more adjacent information terminal(s) from the list, and acquires a message from the message box of the terminal(s). The selection method can be random or sequential based on a round robin approach.

Then the acquired message and the current message box 502 are compared, and the new message is stored in the message box 502 according to the above mentioned rule. The message is forwarded by the other information terminals 102, which refer to this information terminal 102, performing the same operation.

Fig. 6 depicts a state of a message being forwarded using a simple example. In the example in Fig. 6, a message is propagated in the nodes 601, 602, 603, 604 and 605. Each node has two adjacent nodes respectively, and the size of the message box is assumed to be 1 (only one message can be stored) to simplify description. Each node sequentially refers to only one adjacent message box each time round-robin.

Now it is assumed that an event 621 is generated, and the node 601 creates a message 610 and posts the message in the message box. After a unit of time elapses, the node 602 acquires the message 610 from the message box of the node 601, and posts the message 610 in the message box of the node 602 to open the message 610 to the public. After another unit of time elapses, the node 603 acquires the message 610 from the node 602. Here it is assumed that the node 604 has already browsed the message boxes of adjacent nodes other than the node 602. The node 602 refers to the node 605, but node 602 does nothing since the message box of the node 605 is empty.

After another unit of time elapses, the node 604 acquires the message 610 from the message box of the node 602, but node 602 does nothing since the node 602 has already referred to the message box of the node 601 and has already acquired the message 610. In the same manner, the node 603 does nothing, since the node 603 has already acquired the message 610 in the message box of the node 602. It is assumed that the node 605 created a message 611 on a new event 622, and posted this message 611 in the message box during this time. Then after another unit of time elapses, the node 602 refers to the message box of the node 605, knows that the new message 611 is posted, and overwrites the message 610 with the message 611. Hereafter the message 611 is sequentially transferred to the downstream nodes 603 and 604.

A message created by each information terminal 102 propagates through the network using this message transfer mechanism. TTL (Time To Live) may be set for a message so that a message after a predetermined time has elapsed or a transferred message that hopped the predetermined number of nodes or more is automatically discarded.

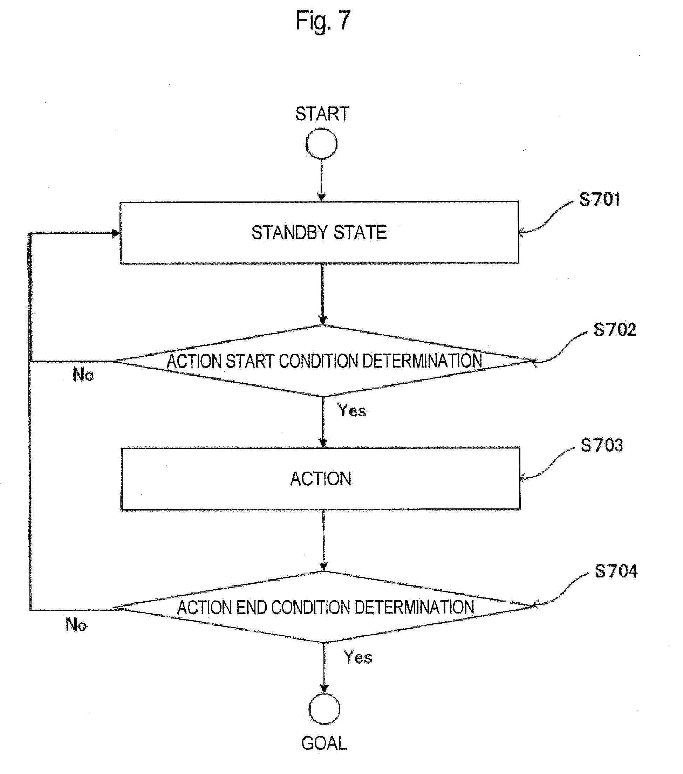

Now the operation when each information terminal 102 executes an action based on the message information will be described with reference to the flow chart in Fig. 7. The information management unit 112 executes a predetermined action based on new information acquired by the messaging unit 116. An example of the "action" which is referred to here is to display information to a user and enter a standby state to wait for an input or some action by the user, or to automatically perform certain information processing, and this action is executed by the action algorithm unit 117.

To simply description, here it is assumed that an action to display the summary information of a message to the user is predetermined, but the present invention is not limited to this mode. For example, it is also possible to install a more advanced information processing, such as displaying information to a user only when information the user is interested in or information on a predetermined category is input.

If the information terminal 102 is started up, the information terminal 102 enters a new message standby state (step S701). Then in step S702 (action start condition determination), it is determined whether a new message was inputted. If it is determined in step S702 that a new message was not inputted, processing returns to step S701. If it is determined in step S702 that a new message was inputted, then processing advances to step S703.

In step S703, the action algorithm unit 117 is called up and the summary information is displayed to the user, and processing advances to step S704. In step S704, it is determined whether a predetermined action end condition is satisfied. Here an action end condition is information inputted by the user pressing an OK button, or generation of a predetermined time of a time out event. If this end condition is satisfied, processing returns to step S701, and enters the standby state again to wait for an input of a new message. The action algorithm unit 117 need not be called up for an information terminal 102, which only performs messaging.

Because of the above described functions, the user of the information terminal 102 can acquire information in real-time which is posted by another user and which propagates the network, regardless of the state of the user, and the user can respond to the posted information with an action. Here the information terminal 102 according to this embodiment excels in real-time characteristics because the above mentioned network structure is created, and links are created with nodes having similar probability regardless of the distance scale, which means that new information can be acquired quickly regardless of the state (place), without depending on the state (e.g. current position) of the user who created the new information and the state of the node that received the information, and a desired action can be taken based on this information.

Therefore according to the present embodiment, a network structure is created so that regardless of the distance scale of the information terminal 102, which transmits detailed information on a search event that is dynamically created, from the searcher, the searcher can acquire information at a predetermined probability, and the coordinated forwarding of the detailed information message is performed on this network. As a result, regardless where the searcher is positioned on the network with respect to an arbitrary search event, the searcher can efficiently acquire a message on the search event.

Furthermore, only one or a small number of limited adjacent information terminal(s) 102 can transfer a message at the same time, hence the consumption of network resources are less than that of broadcasting. In each information terminal 102, old information is overwritten by new information and is discarded, so the buffer size of each information terminal 102 can be small.

According to this embodiment, an information terminal moves or changes the internal state of the terminal using acquired information as a clue, so as to gradually approach or zero in on the state of information of interest, and improves the accuracy of the information under search by repeating actions based on information newly received during this movement or change.

In this embodiment, the management server 101 is used to calculate or manage the network configuration among the information terminals, but a desired network structure may also be created using a distributed method without using the management server 101. For example, an initial adjacent list is provided to the information terminal 102 and the information terminals 102 sequentially update the adjacent list while communicating and exchanging information with the current adjacent information terminals.

The number of type 0 adjacent nodes and the number of type 1 adjacent nodes of an information terminal 102 may be the same, or a ratio of the adjacent nodes of one of the types may be higher than the other. The ratio of the numbers may be changed as time elapses. For example, a ratio of the type 1 adjacent nodes may be set higher in the beginning, in order to collect messages from nodes over a wide range, and a ratio of the type 0 adjacent nodes may be increased so that messages from nodes in a close distance can be efficiently acquired after some elapse of time.

Examples

[Example 1]

Example 1 of the present invention will now be described.

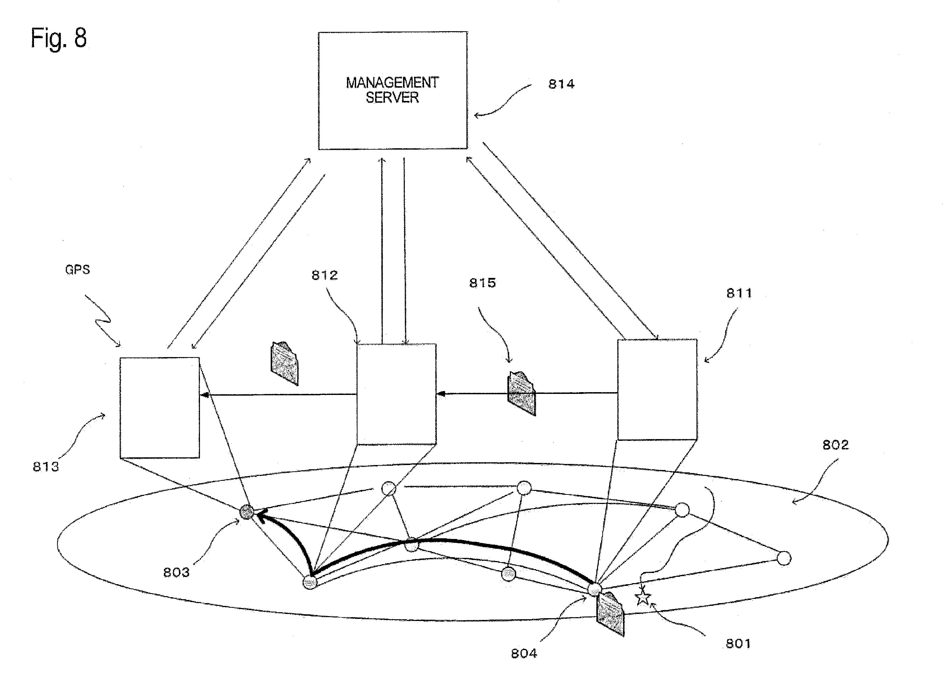

In the example in Fig. 8, the information terminals are smart phones 811, 812 and 813, and each of a plurality of users distributed in the subject field 802 have their own smart phone. Here a case when target 801, which exists in a field 802, moves dynamically, and a tracker 803 searches for the target 801 using messages acquired by the coordinated information collection system of the present invention, will be described.

Users distributed in the field 802 move merely randomly without knowing the location of the unnamed tracker 803, and if the target 801 enters within a certain radius range, each user posts this target witness information in the message box, messaging the time and place the target was witnessed. Each of the other users acquires only new information out of the target witness information of the adjacent message boxes, and posts the acquired information in the message box of this user. By the link of this message transfer, the tracker 803 collects the target witness information and searches for the target 801. Tracking succeeds when the target 801 enters a certain radius range of the tracker 803. The message transfer is automatically and periodically performed among the smart phones of the users, and a message of a predetermined or longer time that has elapsed since reception is discarded by an appropriate TTL.

All users periodically notify their respective current position to the management server 814, and acquire new adjacent node information calculated by the network configuration management unit 123 at each notification. In this example, it is assumed that the tracker 803 can move faster than the target 801.

Now it is assumed that tracking began from an arbitrary position. Each current position [of the smart phones] is notified to the management server 814, a list of IP addresses, as the adjacent information, is notified to all the smart phones, and the IP addresses of the adjacent smart phones are registered in each smart phone. A user who happens to be near a target 801 at each timing posts a target witness message with an appropriate probability. For example, it is assumed that a user of a smart phone 811 posted a target witness information as a message 815. Then at a next timing, the message 815 is propagated to the smart phone 812, and at a next timing, the message 815 is propagated to the smart phone 813 of the tracker 803. The tracker 803 approaches the target 801 by moving to the target witness position as stated in the message 815. In this case the transfer delay for this message is 2.

Since there is a delay, from the witness 804 witnessing the target 801 until the tracker 803 receiving the message 815 and moving to the target position, and since the target is also moving during this same time, the tracker 803 cannot always quickly catch up with the target 801.

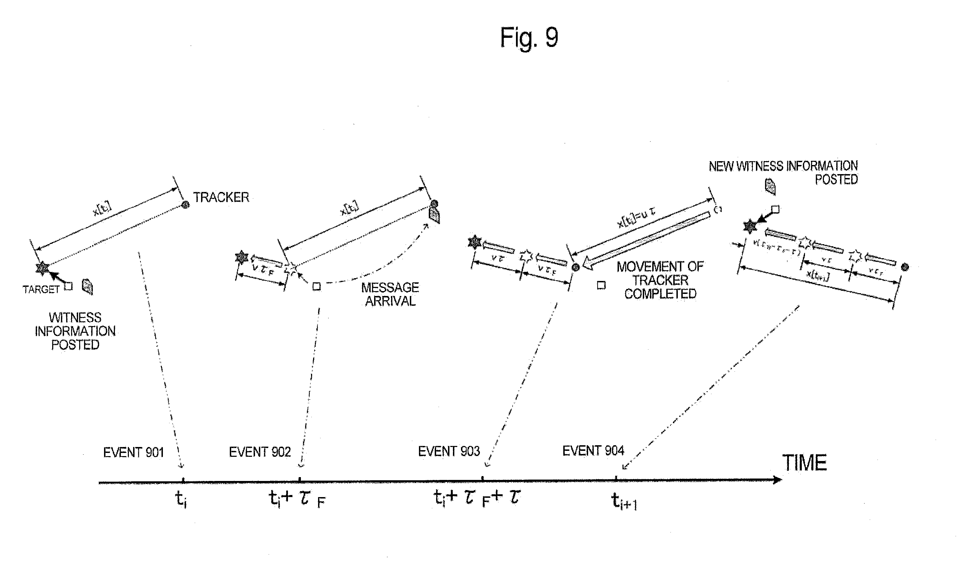

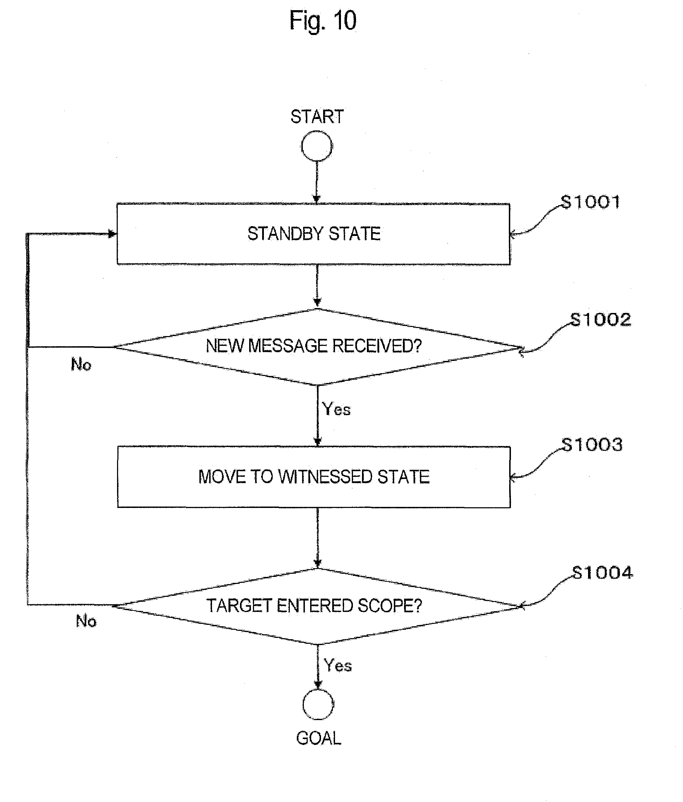

Fig. 9 is a diagram depicting a state of tracking in detail, from time $t_i$ when the target is witnessed to time $t_{i+1}$ when the target is witnessed again, and Fig. 10 is a flow chart depicting a tracking algorithm of the tracker. Here the action algorithm provided in the information terminal of the tracker has a function to display the latest received messages for the tracker in sequence from the most recent, and based on this information, the tracker tracks the target in the sequence shown in Fig. 10.

The tracker is in message standby state (step S1001) at time $t_i$. A user near the target witnesses the target and posts the target witness information (event 901). The distance between the target and the tracker in this case is assumed to be x $[t_i]$. The message, including the target witness information, arrives to the tracker at message transfer delay $\tau_F$ (event 902). If the moving velocity of the target is v, then the target will have advanced by $v\tau_F$ when the tracker receives the message.

The tracker who received the message determines whether a new message was received in step S1002, and because in this case a message was received, processing advances to step S1003. In step S1003, the tracker advances to the place stated in the target witness information at velocity u. It takes $\tau = x[\tau_i]/u$ until the tracker reaches the place stated in the target witness information (event 903). This means that the target advances further by $v_\tau$ during this time. As a result, the distance between the tracker and the target when the event 903 is generated is $v\tau_F + v_\tau$ at the maximum.

In step S1004, it is determined whether the target entered the scope range $\delta$ of the tracker. Tracking is a success if the target is in the scope range $\delta$. If the target is not in the scope range $\delta$, the tracker stops, returns to step S1001, and waits to receive the next message.

If the time when the next target witness event 904 is generated is $t_{i+1} = t_i + \tau_w$, the same operation is repeated with x$[t_{i+1}]$ as a distance between the target and the current position of the tracker, but if x$[t_{i+1}]$ - x$[t_i]$ < 0, then the distance from the target decreases with certainty, and eventually the condition in step S1004 is satisfied.

In this example, the interval $\tau_w$ between the witness events that occur is long, but if the witness events are generated more frequently, the tracker may acquire a new witness message while moving. In this case, the tracker who reached a target witness spotting can immediately head for the next target witness spotting, therefore tracking success probability increases. The goal may be changed to the latest target witness spotting while moving.

According to the coordinated information collection system of the present invention, if the message transfer platform is created, a shortcut link creation probability, with respect to a distance scale, becomes approximately the same, so if a predetermined condition (e.g. velocity ratio of the target and the tracker with respect to a given network scale, scope range, amount of transfer delay) is satisfied, the target witness information can be efficiently acquired without depending on the initial positions of the tracker and the target. Whereas in the case of a cluster network created only with local links, without using shortcut links, a probability of receiving target witness information is low when the tracker and the target are distant. If shortcut links are created randomly, on the other hand, a probability of creating a shortcut link with a user at a long distance scale increases, and a probability of receiving a message decreases when this distance between the tracker and the target becomes short, hence the unexpected number of steps until tracking success increases.

[Example 2]

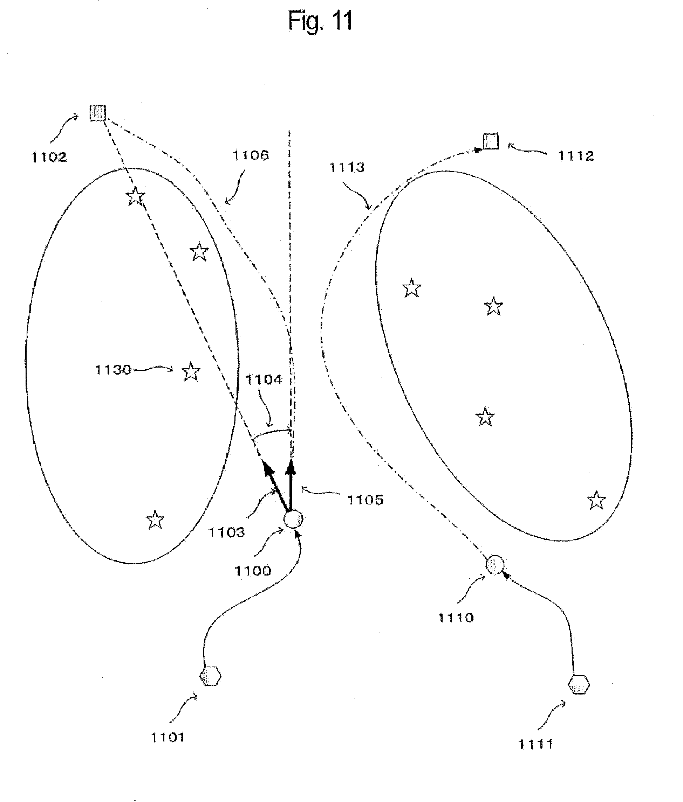

Example 2 of the present invention will now be described with reference to Fig. 11.

If the coordinated information collection system of the present invention is used, a user, who received witness information on a suspect while moving from a departure place to a destination, can change their route, and select a safe route that maintains at least a predetermined distance from the suspect while sequentially receiving witness information. In the case of an example in Fig. 11, a user 1100 is heading for a destination 1102 from a departure place 1101, and a user 1110 is heading for a destination 1112 from a departure place 1111, both attempting to take the shortest distance.

In this field, a plurality of suspects exist and are moving at random. A suspect can cause harm to a general user who enters a predetermined range from this individual with certain probability. In Example 2, the "internal state" of the user refers to a physical place, for example, and users form a network using physical places, and if a user happens to be near a suspect and witnesses that individual, this user posts a message, on the coordinated information collection system including the time when the suspect was witnessed and what this suspect looked like.

If this message is received, each user checks whether the position where this suspect was witnessed is within a predetermined distance from a line connecting the current position of the user and the destination, and if so, the user changes direction at a proper angle to take a detour route. For example, it is assumed that the user 1100, who is moving in the traveling direction 1103, received witness information on suspect 1130. In this case, the user 1100 changes their current traveling direction to the traveling direction 1105 by making a turn at detour angle 1104. If a new witness information on a suspect is received before reaching a place connected with the destination 1102 on a straight line, the user 1100 takes a detour route again in the same manner, correcting their direction at a different angle, so as to reach the destination in a shortest distance.

By using the coordinated information collection system of the present invention, a user with good will, such as a neighbor or an individual interested in maintaining public safety, can simply post witness information about a suspect on the system, whereby the message propagates through the network, and an unspecified user interested in the message (e.g. a user traveling on a route on which the witness position of the suspect exists) can receive the message, and avoid danger in advance.

A user who relays the information simply receives messages from adjacent nodes, which are automatically and periodically updated, and buffers these messages if the terminal of the user has resources, therefore consumption of the network resources and the computing resources are kept low, and this user need not actively coordinate with a user who is interested in acquiring the message.

In the case of many network structures other than the embodiments of the present invention, a probability of receiving a message largely depends on the distance of a place where the message is posted and a current position of the user. But according to the present invention, the dependence on this distance scale can be kept to a minimum. Another characteristic of the present invention is that the user who posts information need not have concern for reliability of this information. This is because it is essentially the reception side that determines message reliability. For example, if there are many other users who posted a message on a suspect, statistically the individual that many determined as suspicious has a high probability of being suspicious, and the reception side can statistically evaluate reliability based on a number of users who transmitted a message. For example, the user can regard information as highly reliable if the number of messages on a suspect reaches the predetermined number or more within a predetermined area in a same time period.

Furthermore, another user 1110 heading to a similar destination among the users receiving this information naturally takes a similar route to avoid danger by similar processing, which means that users who received the information tend to share a same route. For example, the user 1100 and the user 1110 in Fig. 11 take the route 1106 and the route 1113 respectively, which share some area. Generally a suspect tends to avoid an area where individuals gather, or has difficulty in performing harmful action in such an area, therefore safety is increased.

[Example 3]

Example 3 of the present invention will now be described.

Among Internet web pages, there are many pages hosting computer viruses or which include content harmful to children. Companies who develop security software monitor these pages, and provide software-based functions to block such pages in advance, but essentially the information is posted after a harmful web page is discovered and confirmed by monitoring and reporting, therefore some delay is generated until the security software program installed on each computer downloads the functions that enable blocking.

Furthermore computer viruses and harmful pages change dynamically, so it is difficult to follow up the new generation and modification of viruses and harmful pages in real-time. Also the only available remedy at the moment to control Web sites, which are not necessarily harmful but which parents regard as inappropriate for their children, is for ISPs to block these sites when the user registers for Internet service.

If the coordinated information collection system of the present invention is used, harmful web page information, posted by a user who happens to browse such a Web site or a user who acquired information on such a Web site, can be acquired, which makes it possible to quickly launch countermeasures to avoid accessing the site.

A case of applying the present invention to a parental control program, which automatically blocks harmful sites for children, is considered. A plurality of adults post information on a site, which includes the content that is regarded as harmful for children. In this example, the "internal state" of the user refers to a vector expressing a characteristic of a Web site currently being browsed or a past record thereof. This vector is a vector created based on the frequency of major words used on the site, for example, and the distance between internal states can be defined based on cosine similarity of the vectors.

A network is dynamically constructed using the internal states, and each user posts a time when a harmful site was browsed and the URL thereof. This information is propagated to various users via the network. The above mentioned parental control program has criteria to determine reliability of the degree of harm of the information, and a definition of the countermeasures to take (e.g. blocking, issuing a warning, logging information and e-mailing it to parents), and constantly monitors the current internal state of a child-user based on the current Web browsing record. Then a predetermined action is taken if necessary by comparing this internal state and the harmful site information in the received message. For example, access to the harmful site stated in the harmful site information, which was regarded as reliable, is blocked, or access to the Web site is disabled when the internal state approaches the site at a predetermined distance.

A newly created web page can be found by using the same structure. For example, it is assumed that a user posted the URL of an interesting web page on the network of the coordinated information collection system of the present invention. If there are many such users, many messages on this web page propagate, and a user who receives these messages can know about the web page that they are interested in, and what is popular among many users.

By sequentially approaching the target page in the same manner as the tracking in Example 1, a page currently being browsed can be efficiently moved closer to the page. Here a filtering function, to display only messages which contain information of interest to the user, may be included in the program.

As described above, the present invention can be applied to an application to efficiently collect information with high real-time characteristics, such as events generated in a dynamically changing state. In particular, the present invention can be applied to an application to search and track a dynamically moving target, such as a mobile game and a lost child. The present invention could also be applied to crime prevention and security in terms of avoiding danger. The present invention can also be applied to support users in order to efficiently access popular content, information and web pages.

This application claims priority based on Japanese Patent Application No. 2010-204609 filed on September 13, 2010, and includes all disclosures thereof.

While the present invention has been described with reference to the embodiments, the embodiments are not intended to limit the invention. Configuration and details described in the present invention can be modified in various ways by those skilled in the art within the scope of the present invention.

Part or all of the embodiments can be described according to the following additions, but the present invention is not limited to these descriptions. (Addition 1) A coordinated information collection system comprising a management server and a plurality of information terminals which are connected via a communication network, wherein the management server has:

a terminal state management unit that manages state information transmitted from the information terminals and including information on an information terminal and a user associated with each of the information terminals; and a network configuration management unit that selects adjacent information terminals of the information terminals, based on the state information of each of the information terminals managed by the terminal state management unit, and calculates a connection link, which is a network for interconnecting the adjacent information terminals, and

the information terminals respectively have:

an internal state management unit that manages the state information of the information terminal;
an adjacent management unit that manages information on adjacent information terminals selected by the network configuration management unit; and
a messaging unit that stores a message acquired from an adjacent information terminal via the connection link and a message inputted by the user in a message box opened to other information terminals, and manages these messages, and wherein
the network configuration management unit calculates a degree of dissimilarity among information terminals based on the state information of each information terminal, and calculates a first type connection link that creates a connection link sequentially from an information terminal having a lowest degree of dissimilarity, and a second type connection link which is created stochastically based on the degree of dissimilarity.

(Addition 2)

The coordinated information collection system according to Addition 1, further comprising: an information management unit that analyzes a message acquired from another information terminal via the connection link; and an action algorithm unit that executes a predetermined processing using a message analysis result by the information management unit.

(Addition 3)

The coordinated information collection system according to Addition 1, wherein the internal state management unit acquires and manages a current position measured by GPS as the state information, and the degree of dissimilarity is calculated from relative positions among information terminals based on the current positions.

(Addition 4)

The coordinated information collection system according to Addition 1, wherein the second type connection link is generated with a similar probability regardless the degree of dissimilarity, and when the degree of dissimilarity with an information terminal other than an information terminal connected via the first type connection link is r, a probability that the second type connection link is created with this information terminal is in proportion to the $-\alpha$th power of r ($\alpha$ is a positive number).

(Addition 5)

The coordinated information collection system according to Addition 1, wherein the messaging unit sequentially stores a new message, which is periodically acquired via the first type connection link or the second type connection link, in the message box, then if the storage capacity of the message box reaches the upper limit, the messaging unit discards the oldest message among the messages on a same target as a new message from among the stored messages, and when there are no messages on a same target as a new message, the messaging unit discards the oldest message among all the stored messages, and stores the new message, and discards as well a message of which storage period is not less than a predetermined time or a message acquired via the predetermined number or more information terminals.

(Addition 6)

The coordinated information collection system according to Addition 2, wherein the message is on target witness information, including a position where a target has been witnessed, and the action algorithm unit outputs a message of which generation time is the latest, until a distance between the current terminal and the target becomes a predetermined distance or less.

(Addition 7)

The coordinated information collection system according to Addition 2, wherein the message is on target witness information, including a position where the target has been witnessed, and the action algorithm unit outputs a message of which generation time is the latest until the current terminal arrives at the destination.

(Addition 8)

The coordinated information collection system according to Addition 2, wherein the state information is a value that indicates content characteristics of a web page which the user is browsing or has browsed using the information terminal, the degree of dissimilarity reflects a degree of dissimilarity of content characteristics of any two web pages, the message contains information on the content of a web page, and the action algorithm unit blocks accessing a harmful web page according to predetermined conditions, using a message analysis result.

(Addition 9)

A coordinated information collection method used for a coordinated information collection system having a management server and a plurality of information terminals which are connected via a communication network, wherein the management server manages state information, associated with each of the information terminals and transmitted from the information terminal, and selects adjacent information terminals of each information terminal based on the state information of each of the information terminals, and calculates a connection link, which is a network for interconnecting adjacent information terminals, and

the information terminal stores a message acquired from an adjacent information terminal via the connection link, and a message inputted by the user in a message box opened to other information terminals, and manages these messages, and

the connection link includes a first type connection link that creates a connection link sequentially from an information terminal having a lowest degree of dissimilarity, among information terminals, which is calculated based on the state information of each information terminal, and a second type connection link which is created stochastically based on the degree of dissimilarity.

(Addition 10)

A program for causing a computer to function as:

a terminal state management unit that manages state information transmitted from a plurality of information terminals and including information on an information terminal and a user associated with each of the information terminals; and a network configuration management unit that selects adjacent information terminals of the information terminals, based on the state information of each of the information terminals managed by the terminal state management unit, and calculates a connection link, which is a network for interconnecting the adjacent information terminals, wherein

the network configuration management unit calculates a degree of dissimilarity among information terminals based on the state information of each of the information terminals, and calculates a first type connection link that creates a connection link sequentially from an information terminal having a lowest degree of dissimilarity, and a second type connection link which is created stochastically based on the degree of dissimilarity.

The present invention is suitable for applications to efficiently collect information with high real-time characteristics, such as events generated in a dynamically changing state.
101 management server
102 information terminal
103 information terminal group
104 network
111 communication unit
112 information management unit
113 internal state management unit
114 interface unit
115 adjacent management unit
116 messaging unit
117 action algorithm unit
121 communication unit
122 terminal state management unit
123 network configuration manage unit
201, 202, 203, 204 node

210 area
401 terminal state management table
402 type 0 adjacent calculation unit
403 type 1 adjacent calculation unit
404 adjacent information management unit
405 adjacent information management table
501 message management unit
502 message box
503 message
601, 602, 603, 604, 605 node
610,611 message
621,622 event
801 target
802 field
803 tracker
811, 812, 813 smart phone
814 management server
815 message
901,902,903,904 event
1100, 1110 user
1101, 1111 departure place
1102, 1112 destination
1103, 1105 traveling direction
1104 traveling direction
1104 detour angle
1106, 1113 route
1130 suspect

## Claims

1. A coordinated information collection system comprising a management server and a plurality of information terminals which are connected via a communication network, wherein
the management server has:

   a terminal state management unit that manages state information transmitted from the information terminals and including information on an information terminal and a user associated with each of the information terminals; and
   a network configuration management unit that selects adjacent information terminals of the information terminals, based on the state information of each of the information terminals managed by the terminal state management unit, and calculates a connection link, which is a network for interconnecting the adjacent information terminals, and
   the information terminals respectively have:
   an internal state management unit that manages the state information of the information terminal;
   an adjacent management unit that manages information on adjacent information terminals selected by the network configuration management unit; and
   a messaging unit that stores a message acquired from an adjacent information terminal via the connection link and a message inputted by the user in a message box opened to other information terminals, and manages these messages, and wherein
   the network configuration management unit calculates a degree of dissimilarity among information terminals based on the state information of each information terminal, and calculates a first type connection link that creates a connection link sequentially from an information terminal having a lowest degree of dissimilarity, and a second type connection link which is created stochastically based on the degree of dissimilarity.

2. The coordinated information collection system according to Claim 1, further comprising:

   an information management unit that analyzes a message acquired from another information terminal via the connection link; and

an action algorithm unit that executes predetermined processing using a message analysis result by the information management unit.

3. The coordinated information collection system according to Claim 1, wherein
the internal state management unit acquires and manages a current position measured by GPS as the state information, and
the degree of dissimilarity is calculated from relative positions among information terminals based on the current positions.

4. The coordinated information collection system according to Claim 1, wherein
the second type connection link is generated with a similar probability regardless the degree of dissimilarity, and
when the degree of dissimilarity with an information terminal other than an information terminal connected via the first type connection link is r, a probability that the second type connection link is created with this information terminal is in proportion to the $-\alpha$th power of r ($\alpha$ is a positive number).

5. The coordinated information collection system according to Claim 1, wherein
the messaging unit sequentially stores a new message, which is periodically acquired via the first type connection link or the second type connection link, in the message box,
when the storage capacity of the message box reaches the upper limit, the messaging unit discards the oldest message among the messages on a same target as a new message from among the stored messages, and when there are no messages on a same target as a new message, the messaging unit discards the oldest message among all the stored messages, and stores the new message, and
discards as well a message of which storage period is not less than a predetermined time or a message acquired via a predetermined number or more information terminals.

6. The coordinated information collection system according to Claim 2, wherein
the message is on target witness information, including a position where a target has been witnessed, and
the action algorithm unit outputs a message of which generation time is the latest, until the distance between the current terminal and the target becomes a predetermined distance or less.

7. The coordinated information collection system according to Claim 2, wherein
the message is on target witness information, including a position where the target has been witnessed, and
the action algorithm unit outputs a message of which generation time is the latest until the current terminal arrives at the destination.

8. The coordinated information collection system according to Claim 2, wherein
the state information is a value that indicates content characteristics of a web page which the user is browsing or has browsed using the information terminal,
the degree of dissimilarity reflects a degree of dissimilarity of content characteristics of any two web pages,
the message contains information on the content of a web page, and the action algorithm unit blocks accessing a harmful Web page according to predetermined conditions, using a message analysis result.

9. A coordinated information collection method used for a coordinated information collection system having a management server and a plurality of information terminals which are connected via a communication network, wherein
the management server manages state information, associated with each of the information terminals and transmitted from the information terminal, and selects adjacent information terminals of each information terminal based on the state information of each of the information terminals, and calculates a connection link, which is a network for interconnecting adjacent information terminals, and
the information terminal stores a message acquired from an adjacent information terminal via the connection link, and a message inputted by the user in a message box opened to other information terminals, and manages these messages, and
the connection link includes a first type connection link that creates a connection link sequentially from an information terminal having a lowest degree of dissimilarity, among information terminals, which is calculated based on the state information of each information terminal, and a second type connection link which is created stochastically based on the degree of dissimilarity.

10. A program for causing a computer to function as:

a terminal state management unit that manages state information transmitted from a plurality of information terminals and including information on an information terminal and a user associated with each of the information terminals; and

a network configuration management unit that selects adjacent information terminals of the information terminals, based on the state information of each of the information terminals managed by the terminal state management unit, and calculates a connection link, which is a network for interconnecting the adjacent information terminals, wherein

the network configuration management unit calculates a degree of dissimilarity among information terminals based on the state information of each of the information terminals, and calculates a first type connection link that creates a connection link sequentially from an information terminal having a lowest degree of dissimilarity, and a second type connection link which is created stochastically based on the degree of dissimilarity.

## Fig. 1

121 → COMMUNICATION UNIT

122 → TERMINAL STATE MANAGEMENT UNIT

123 → NETWORK CONFIGURATION MANAGEMENT UNIT

101

104

NW

102

111 → COMMUNICATION UNIT

114 INTERFACE UNIT

112 INFORMATION MANAGEMENT UNIT

115 ADJACENT MANAGEMENT UNIT

113 INTERNAL STATE MANAGEMENT UNIT

MESSAGING UNIT

117 ACTION ALGORITHM UNIT

116

103

EP 2 618 298 A1

## Fig. 2

# Fig. 3

| ID | STATE |
|----|-------|
| 1 | $\xi_1$ |
| 2 | $\xi_2$ |
| $\vdots$ | $\vdots$ |
| N | $\xi_N$ |

Fig. 4

401

| ID | STATE |
|---|---|
| 1 | $\xi_1$ |
| 2 | $\xi_2$ |
| $\cdot$ | $\cdot$ |
| N | $\xi_N$ |

402 — TYPE 0 ADJACENT CALCULATION UNIT

403 — TYPE 1 ADJACENT CALCULATION UNIT

404 — ADJACENT INFORMATION MANAGEMENT UNIT

405

| ID | TYPE 0 ADJACENT | TYPE 1 ADJACENT |
|---|---|---|
| 1 | $\tau_{1,1}, \tau_{1,2}, \cdots, \tau_{1,k0}$ | $\kappa_{1,1}, \kappa_{1,2}, \cdots, \kappa_{1,k1}$ |
| 2 | $\tau_{2,1}, \tau_{2,2}, \cdots, \tau_{2,k0}$ | $\kappa_{2,1}, \kappa_{2,2}, \cdots, \kappa_{2,k1}$ |
| $\cdots$ | $\cdots$ | |
| i | $\tau_{i,1}, \tau_{i,2}, \cdots, \tau_{i,k0}$ | $\kappa_{i,1}, \kappa_{i,2}, \cdots, \kappa_{i,k1}$ |
| $\cdots$ | $\cdots$ | |
| N | $\tau_{N,1}, \tau_{N,2}, \cdots, \tau_{N,k0}$ | $\kappa_{N,1}, \kappa_{N,2}, \cdots, \kappa_{N,k1}$ |

Fig. 5

NEWLY CREATED
MESSAGE

NEWLY RECEIVED
MESSAGE

MESSAGE
MANAGEMENT UNIT

501

MESSAGE BOX

502

503

(CATEGORY ID, TIME)

$(3, t_3)$

$(4, t_5)$

$(2, t_2)$

$(1, t_1)$

ANOTHER
USER

Fig. 6

| t | NODE 601 | NODE 602 | NODE 603 | NODE 604 | NODE 605 |
|---|----------|----------|----------|----------|----------|
| 0 | 610 | — | — | — | — |
| 1 | 610 | 610 | — | — | — |
| 2 | 610 | 610 | 610 | — | — |
| 3 | 610 | 611 | 610 | 610 | 611 |
| 4 | 610 | 611 | 610 | 610 | 611 |
| 5 | 610 | 611 | 611 | 610 | 611 |
| 6 | 610 | 611 | 611 | 611 | 611 |

# Fig. 7

START

STANDBY STATE — S701

ACTION START CONDITION DETERMINATION — S702

No / Yes

ACTION — S703

ACTION END CONDITION DETERMINATION — S704

No / Yes

GOAL

Fig. 8

MANAGEMENT
SERVER

814

GPS

812

815

811

813

802

803

804

801

EP 2 618 298 A1

23

Fig. 9

EP 2 618 298 A1

# Fig. 10

START

◯

STANDBY STATE     S1001

NEW MESSAGE RECEIVED?     S1002

No

Yes

MOVE TO WITNESSED STATE     S1003

TARGET ENTERED SCOPE?     S1004

No

Yes

◯

GOAL

# Fig. 11

<div align="center">**INTERNATIONAL SEARCH REPORT**</div>

| | International application No. |
|---|---|
| | PCT/JP2011/069157 |

A. CLASSIFICATION OF SUBJECT MATTER
*G06Q50/00*(2006.01)i

According to International Patent Classification (IPC) or to both national classification and IPC

B. FIELDS SEARCHED

Minimum documentation searched (classification system followed by classification symbols)
G06Q50/00

Documentation searched other than minimum documentation to the extent that such documents are included in the fields searched

| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| T | Nobuharu KAMI et al., "Information dissemination Network for Real Space Social Networking Services", 2011 Nen The Institute of Electronics, Information and Communication Engineers Sogo Taikai, 2011.03, page 224 | 1-10 |
| A | JP 2008-311844 A (Nippon Telegraph and Telephone Corp.), 25 December 2008 (25.12.2008), abstract (Family: none) | 1-10 |
| A | JP 2004-274309 A (Sony Ericsson Mobile Communications Japan, Inc.), 30 September 2004 (30.09.2004), paragraph [0058] (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 November, 2011 (17.11.11) | 29 November, 2011 (29.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/069157

C (Continuation).   DOCUMENTS CONSIDERED TO BE RELEVANT

| Category* | Citation of document, with indication, where appropriate, of the relevant passages | Relevant to claim No. |
|---|---|---|
| A | Takashi MISHINA, "MANET Forensics ni Okeru Bloom Filter ni yoru Koritsuteki na Shoko Kaiseki Shuho", Symposium on Multimedia, Distributed, Cooperative and Mobile Systems (DICOMO2009) Ronbunshu, IPSJ Symposium Series, vol.2009, no.1, [CD-ROM], 01 July 2009 (01.07. 2009), vol.2009, pages 815 to 822 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010204609 A

**Non-patent literature cited in the description**

- *DARPA Network Challenge PROJECT REPORT,* 16 February 2010, https://networkchallenge.darpa.mil/ProjectReport.pdf